# EUROPEAN PATENT APPLICATION

(11) **EP 3 797 880 A1**
(43) Date of publication of application: **31.03.2021**
(21) Application number: 19831471.8
(22) Date of filing: 02.07.2019
(51) Int. Cl.: B06B 1/04, A47C 7/62, A47C 7/72, B60N 2/90, B60N 3/00, H02K 33/18

(54) **VIBRATION GENERATING DEVICE**

(30) Priority: 05.07.2018 JP 2018128276
(71) Applicant: Clarion Co., Ltd., Saitama-shi, Saitama 330-0081 (JP)
(72) Inventor: KONO, Kenji, Saitama-shi, Saitama 330-0081 (JP)
(74) Representative: Kramer Barske Schmidtchen Patentanwälte PartG mbB
(86) International application number: PCT/JP2019/026314
(87) International publication number: WO 2020/009112

(57) **Abstract**

A vibration generation apparatus (1) includes a rod-shaped vibrator (400), a case (301) housing one portion of the vibrator (400), a magnet (303) and a yoke (302) disposed on one of the one portion of the vibrator (400) and an inner portion of the case (301), and a coil (308) disposed near the magnet (303) and the yoke (302) and on the other of the one portion of the vibrator (400) and the inner portion of the case (301). The other portion of the vibrator (400) exposed to the outside of the case (301) and the outer portion of the case (301) are connected through the elastic member so as to be able to approach and leave each other. Vibrations are generated by generating a force acting in an extending direction of the vibrator (400) using a current flowing through the coil (308) and a magnetic flux generated by the magnet (303) and the yoke (302) and causing the vibrator (400) and the case (301) to approach and leave each other using the generated force.

## Description

### TECHNICAL FIELD

The present invention relates to a vibration generation apparatus. More specifically, the present invention relates to a vibration generation apparatus that generates vibrations using a force generated by a current flowing through a coil and a magnetic flux generated by a magnet and the like.

### BACKGROUND ART

There have been proposed vibration generation apparatuses that make a notification to a seated person by generating a vibration using a device disposed in a vehicle seat or the like (for example, see Patent Literature 1). In this vibration generation apparatus, a vibration transmission member is disposed in the seating portion of the vehicle seat so as to extend horizontally, and an exciter disposed on an end of the vibration transmission member outputs a vibration horizontally through the vibration transmission member.

Thus, this vibration generation apparatus is able to actively transmit the vibration to the seating portion horizontally unlike a case in which the vibration is transmitted in the up-down direction, where the cushion material or the like can be compressed by the self-weight of a seated person, or the like. As a result, this vibration generation apparatus allows the seated person to perceive the vibration while avoiding absorption of the vibration due to the compression of the cushion material, or the like.

### CITATION LIST

### Patent Literature

[Patent Literature 1] Japanese Unexamined Patent Application Publication No. 2017-19386

### SUMMARY OF INVENTION

### Technical Problem

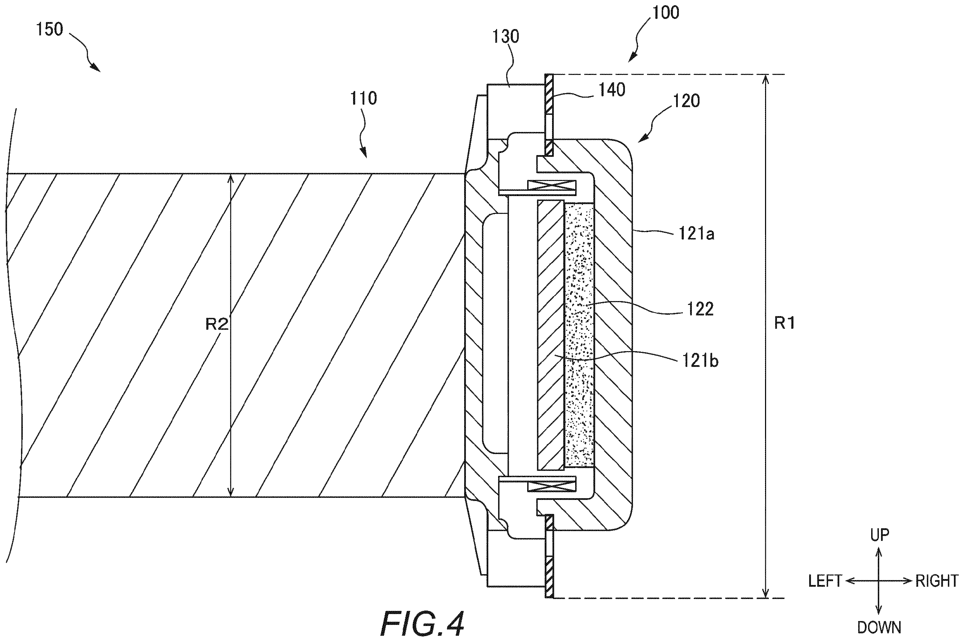

FIG. 4 is a drawing showing a schematic configuration of the vibration transmission member and exciter of the above vibration generation apparatus. In a vibration generation apparatus 150, the external dimension R1 of an exciter 100 seen in the extending direction of a vibration transmission member 110 tends to be greater than the external dimension R2 of the vibration transmission member 110.

In particular, in the exciter 100, a damper 140 is disposed on the outside in the radial direction (e.g., in the up-down direction of FIG. 4) of yokes 121a and 121b and the like so that a vibrator 120 including the yokes 121a and 121b, a magnet 122, and the like actively swings (e.g., move in the left-right direction of FIG. 4) with respect to a case 130. Thus, the vibrator 120 is actively vibrated by the damper 140. However, the disposition of the damper 140 on the outside in the radial direction of the yokes 121a and 121b and the like increases the external dimension R1 of the exciter 100 and makes it difficult to dispose the exciter 100 in the seating portion of a vehicle seat.

Also, in the case of the vibration generation apparatus 150, an end of the vibration transmission member 110 is exposed from the seating portion, and the exciter 100 is disposed on this end. For this reason, when disposing the exciter 100 in the vehicle seat, care must be taken so that the exciter 100 does not become an obstacle to the seated person. For example, if the exciter 100 interferes with a leg or the like of the seated person, the disposition position of the exciter needs to be changed.

Also, the external dimension R1 of the exciter 100 tends to be increased. For this reason, even if an attempt is made to change the disposition position, it is not easy to ensure a disposition space. Accordingly, the disposition position of the vibration generation apparatus 150 needs to be changed properly in accordance with the shape or structure of the vehicle seat or the internal structure of the vehicle, which varies among vehicle types. The vibration generation apparatus 150 is difficult to simply dispose in the vehicle seat.

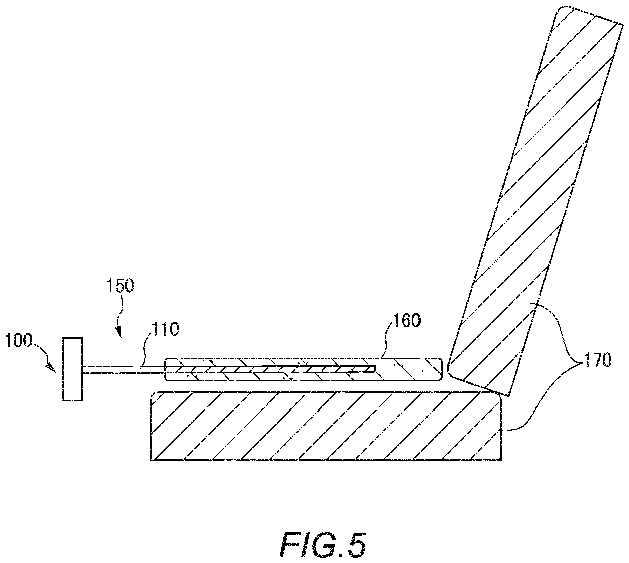

In view of this issue, there is considered a method of disposing the vibration generation apparatus 150 in a cushion put on the upper surface of the seating portion of the vehicle seat rather than disposing the vibration generation apparatus 150 in the seating portion. FIG. 5 is a sectional view showing a cushion 160 in which the vibration transmission member 110 of the vibration generation apparatus 150 is disposed and shows a state in which the cushion 160 is put on a vehicle seat 170.

Since the vibration generation apparatus 150 is disposed in the cushion 160 put on the vehicle seat 170, a person sitting on the cushion 160 perceives a vibration. Use of the cushion 160 allows the vibration generation apparatus 150 to be easily disposed without depending on the vehicle type or the shape of the vehicle seat 170.

However, if the vibration generation apparatus 150 is disposed in the thin, rectangular cushion 160 so as to transmit vibrations horizontally, the external dimension R1 of the exciter 100 needs to fall within the vertical width of the cushion 160. The exciter 100 is provided with the damper 140, and the external dimension R1 is difficult to reduce. That is, it is not easy to put the exciter 100 in the cushion 160. For this reason, as shown in FIG. 5, it is necessary to dispose the exciter 100 alone so as to be exposed from the cushion 160.

Also, even if the exciter having the great external dimension R1 is forcibly disposed in the cushion, an outer portion of the exciter disposed in the cushion may hit the buttocks or the like, resulting in a loss of the seating comfort.

The present invention has been made in view of the above issues, and an object thereof is to downsize a vibration generation apparatus that causes an extended vibrator to generate vibrations.

### Solution to Problem

In response to the above issues, a vibration generation apparatus according to one aspect of the present invention includes a rod-shaped vibrator, a case housing one portion of the vibrator, a magnet and a yoke disposed on one of the one portion of the vibrator and an inner portion of the case, and a coil disposed near the magnet and the yoke and on the other of the one portion of the vibrator and the inner portion of the case. An other portion of the vibrator exposed to outside of the case and an outer portion of the case are connected through an elastic member so as to be able to approach and leave each other, and vibrations are generated by generating a force acting in an extending direction of the vibrator using a current flowing through the coil and a magnetic flux generated by the magnet and the yoke and causing the vibrator and the case to approach and leave each other using the generated force.

In the vibration generation apparatus according to the one aspect of the present invention, the vibrations are generated by causing the vibrator and the case to approach and leave each other with the one portion of the rod-shaped vibrator housed in the case and with the other portion of the vibrator exposed to the outside of the case. The generated vibration is transmitted through the rod-shaped vibrator in the extending direction of the vibrator and thus transmitted over a wider range.

The other portion of the vibrator exposed to the outside of the case and the outer portion of the case are connected through the elastic member so as to be able to approach and leave each other. Thus, there is no need to dispose a damper in the case, unlike in a conventional exciter. This allows for a reduction in the external dimension of the case and thus downsizing of the vibration generation apparatus.

Also, the vibration generation apparatus according to the one aspect of the present invention is not a structure in which a vibrator swung through a damper transmits a vibration only to a case, such as a conventional exciter, but a structure in which the vibrator vibrates with the other portion of the vibrator extended to the outside of the case without using a damper and transmits the vibration to the outside of the case. Thus, the vibration generation apparatus according to the one aspect of the present invention is able to transmit the vibration more effectively and more widely than a conventional exciter, which transmits a vibration only to the case.

In the vibration generation apparatus according to the above aspect, when the current flowing through the coil is stopped, the coil may be returned to a position near the magnet and the yoke by a shape restoring function of the elastic member.

As described above, the vibration generation apparatus according to the one aspect of the present invention is not provided with a damper to support the vibrator in the case, unlike a conventional exciter. Consequently, when the current flowing through the coil is stopped, the coil may be displaced from the magnet and yoke and stop in a position away from the magnet and yoke. In this case, even when a current is passed through the coil again, the current may flow through a low magnetic flux density area, resulting in a failure to generate a force acting in the extending direction of the vibrator.

For this reason, the vibration generation apparatus according to the above aspect uses the shape restoring function of the elastic member connected to the outer portion of the case and the other portion of the vibrator. Specifically, when a current is not flowing through the coil, the shape of the elastic member is restored and the position of the coil is adjusted so that the coil returns to near the magnet and yoke. Thus, when a current flows through the coil, the current of the coil and the magnetic flux of the magnet and yoke generate a force acting in the extending direction of the vibrator, which then causes the vibrator and case to actively approach and leave each other and thus generate vibrations. Also, when the current flowing through the coil is stopped, the movements of the vibrator and case are stopped and the coil is returned to a position near the magnet and yoke as the initial position by the shape restoring function of the elastic member. When a current is passed through the coil again, the current flows through a high magnetic flux density area, since the coil is located near the magnet and yoke.

In the vibration generation apparatus according to the above aspect, the elastic member may be a cushion material, the vibrator and the case may be embedded in the cushion material, and the other portion of the vibrator and the outer portion of the case may be bonded to the cushion material.

The vibration generation apparatus according to the above aspect may be used as a notification device that makes a notification to a person to be notified using a vibration. To make a notification using a vibration, it is preferred to dispose the vibration generation apparatus in an object that a person to be notified is in contact with, so that a vibration can be transmitted to the person to be notified. For example, the vibration generation apparatus is disposed in the seating portion, backrest, or headrest of a seat on which a person to be notified will sit or in a cushion that a seated person will contact (one laid under the buttocks, one inserted between the back and backrest, one used as a pillow, etc.). Thus, a notification is reliably made to the person to be notified.

Specifically, the vibration generation apparatus is embedded in the cushion material of a seat or cushion, and the cushion material is used as an elastic member. Thus, the vibration generation apparatus according to the above aspect is able to make a notification to the person to be notified through the cushion material.

The use of the elastic member eliminates the need to dispose a damper in the case, allowing for a reduction in the external dimension of the case. This makes it easy to dispose the vibration generation apparatus in a seat or cushion, as well as increases disposition flexibility.

In the vibration generation apparatus according to the above aspect, the elastic member may be a first cushion material, the vibrator and the case may be disposed in the first cushion material, the other portion of the vibrator may be in contact with the first cushion material, and a space that allows approaching and leaving of the case with respect to the vibrator may be formed between the case and the first cushion material.

Since the space is formed between the case and the first cushion material, the movement of the case is not hampered by the first cushion material even if the case approaches and leaves the vibrator. Thus, the vibrator and case are able to effectively approach and leave each other and generate vibrations, and the vibrator is able to transmit the great vibration.

Further, in the vibration generation apparatus according to the above aspect, the space formed between the case and the first cushion material may be filled with a softer second cushion material than the first cushion material.

The soft second cushion material filling the space is flexibly and smoothly deformed in response to the case approaching and leaving the vibrator. That is, the movement of the case relative to the vibrator is not hampered by the second cushion material. Also, the soft second cushion material has more excellent vibration transmission characteristics than the space. Thus, the vibration generated by the case is effectively transmitted to the outside of the first cushion material through the second cushion material and first cushion material.

A vibration generation apparatus according to another aspect of the present invention includes a rod-shaped vibrator, a case housing one portion of the vibrator, a magnet and a yoke disposed on one of the one portion of the vibrator and an inner portion of the case, a coil disposed near the magnet and the yoke and on the other of the one portion of the vibrator and the inner portion of the case, and a spring portion including a central portion through which the vibrator passes, one end connected to the inner portion of the case, and another end connected to the one portion of the vibrator. Vibrations are generated by generating a force acting in an extending direction of the vibrator using a current flowing through the coil and a magnetic flux generated by the magnet and the yoke and causing the vibrator and the case to approach and leave each other using the generated force and using the spring portion.

In the vibration generation apparatus according to the another aspect of the present invention, the vibrations are generated by causing the vibrator and the case to approach and leave each other with the one portion of the rod-shaped vibrator housed in the case and with the other portion of the vibrator exposed to the outside of the case. The generated vibration is transmitted through the rod-shaped vibrator in the extending direction of the vibrator and thus transmitted over a wider range.

The vibration generation apparatus according to the another aspect of the present invention is provided with the spring portion. The spring portion includes the central portion through which the vibrator passes, the one end connected to the inner portion of the case, and the other end connected to the one portion of the vibrator housed in the case. Since the vibrator passes through the central portion of the spring portion, the spring portion is disposed on the outer circumferential portion of the rod-shaped vibrator. Thus, vibrations are generated by causing the vibrator and case to approach and leave each other rather than using a damper disposed on the outside in the radial direction of the yoke or the like as in a conventional exciter. Also, the disposition of the spring portion on the outer circumferential position of the rod-shaped vibrator allows for a reduction in the external dimension of the case and thus downsizing of the vibration generation apparatus.

Also, the vibration generation apparatus according to the another aspect of the present invention is not a structure in which a vibrator swung through a damper transmits a vibration only to a case, such as a conventional exciter, but a structure in which the vibrator vibrates with the other portion of the vibrator extended to the outside of the case without a damper and transmits the vibration to the outside of the case. Thus, the vibration generation apparatus according to the other aspect of the present invention is able to transmit the vibration more effectively and more widely than a conventional exciter, which transmits a vibration only to a case.

In the vibration generation apparatus according to the above aspect, when the current flowing through the coil is stopped, the coil may be returned to a position near the magnet and the yoke by an expansion/contraction function of the spring portion.

The vibration generation apparatus according to the above aspect is not provided with a damper that supports a vibrator in a case, unlike a conventional exciter. Consequently, when the current flowing through the coil is stopped, the coil may be displaced from the magnet and yoke and stop in a position away from the magnet and yoke. In this case, even when a current is passed through the coil again, the current may flow through a low magnetic flux density area, resulting in a failure to generate a force acting in the extending direction of the vibrator.

For this reason, when no current is flowing through the coil and the spring portion is back in a stable state, the vibration generation apparatus according to the above aspect adjusts the position of the coil using the expansion/contraction function of the spring portion so that the coil returns to near the magnet and yoke. Thus, when a current flows through the coil, the current of the coil and the magnetic flux of the magnet and yoke generate a force acting in the extending direction of the vibrator, which then causes the vibrator and case to actively approach and leave each other and thus to generate vibrations. Also, when the current flowing through the coil is stopped, the movements of the vibrator and case are stopped and the coil is returned to a position near the magnet and yoke as the initial position by the expansion/contraction function of the spring portion. When a current is passed through the coil again, the current flows through a high magnetic flux density area, since the coil is located in the position near the magnet and yoke.

### Advantageous Effects of Invention

With the vibration generation apparatus according to one embodiment of the present invention, the vibrations are generated by causing the vibrator and the case to approach and leave each other with the one portion of the rod-shaped vibrator housed in the case and with the other portion of the vibrator exposed to the outside of the case. The generated vibration is transmitted through the rod-shaped vibrator in the extending direction of the vibrator and thus transmitted over a wider range.

The other portion of the vibrator exposed to the outside of the case and the outer portion of the case are connected through the elastic member so as to be able to approach and leave each other. Thus, there is no need to dispose a damper in the case, unlike in a conventional exciter. This allows for a reduction in the external dimension of the case and thus downsizing of the vibration generation apparatus.

Also, the vibration generation apparatus according to the one embodiment of the present invention is not a structure in which a vibrator swung through a damper transmits a vibration only to a case, such as a conventional exciter, but a structure in which the vibrator vibrates with the other portion of the vibrator extended to the outside of the case without using a damper and transmits the vibration to the outside of the case. Thus, the vibration generation apparatus according to the one embodiment of the present invention is able to transmit the vibration more effectively and more widely than a conventional exciter, which transmits a vibration only to the case.

### BRIEF DESCRIPTION OF DRAWINGS

FIG. 1 is a partial sectional view showing a state in which a vibration generation apparatus according to a first embodiment is embedded in a cushion;
FIG. 2(a) is a side sectional view showing the vibration generation apparatus according to the first embodiment, and FIG. 2(b) is an enlarged side sectional view showing a portion shown by a dash-dotted line in FIG. 2(a);
FIG. 3 is a partial sectional view showing a state in which a vibration generation apparatus according to a second embodiment is embedded in a cushion;
FIG. 4 is a sectional view showing a schematic configuration of a conventional vibration generation apparatus including a vibration transmission member and an exciter;
FIG. 5 is a side sectional view showing a cushion in which a conventional vibration generation apparatus is disposed and a vehicle seat on which the cushion is put;
FIG. 6 is a partial sectional view showing a state in which a vibration generation apparatus according to a third embodiment is embedded in a cushion;
FIG. 7(a) is an enlarged view showing the partial sectional view shown in FIG; 6, and FIG. 7(b) is a partial sectional view showing another form of the vibration generation apparatus according to the third embodiment; and
FIG. 8 is a partial sectional view showing a state in which a vibration generation apparatus according to a fourth embodiment is embedded in a cushion.

### DESCRIPTION OF EMBODIMENTS

Now, vibration generation apparatuses according to embodiments of the present invention will be described in detail with reference to the drawings.

### [First Embodiment]

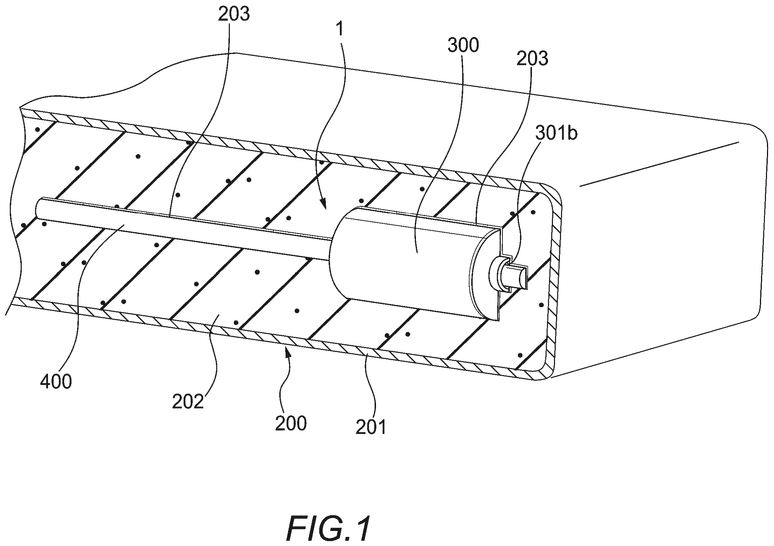

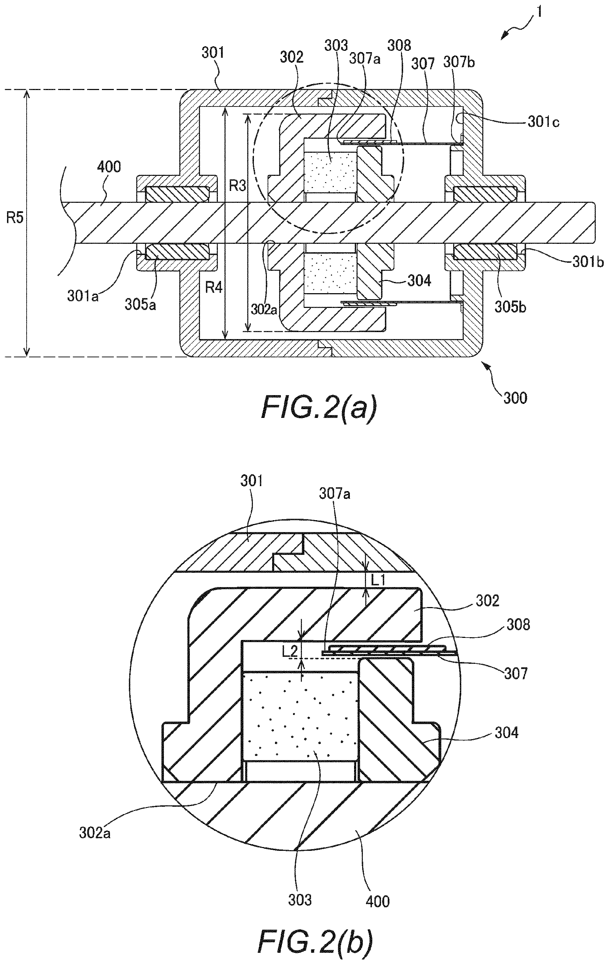

FIGs. 1, 2(a), and 2(b) are drawings showing a schematic configuration of a vibration generation apparatus according to a first embodiment. As shown in FIG. 1, a vibration generation apparatus 1 is disposed in a cushion 200. For convenience, FIG. 1 shows only a portion of the cushion 200 in a cross-section.

The cushion 200 includes a cover 201 forming an outer portion thereof and a cushion material (elastic member) 202 forming an inner portion thereof. The cushion material 202 consists of a typical foam material or the like and has a shape restoring function by which it is deformed so as to expand and contract when a pressure is applied thereto from the outside and restores its original shape when the pressure is removed.

The vibration generation apparatus 1 is embedded in the cushion material 202 of the cushion 200. The outer surface (outer portion) of the embedded vibration generation apparatus 1 is bonded to the cushion material 202 using an adhesive 203.

As shown in FIG. 1, the vibration generation apparatus 1 includes a body 300 and a vibrator 400. The vibrator 400 is a rod-shaped metal member and has a circular cross-section. The body 300 is disposed near an end of the vibrator 400. The body 300 has a cylindrical appearance. The vibrator 400 is mounted to penetrate the cylindrical axis portion of the body 300. The vibrator 400 has a longer length than the body 300. Accordingly, as shown in FIGs. 1, 2(a), and 2(b), a portion of the vibrator 400 is housed in the body 300, and the other portion of the vibrator 400 is exposed from the body 300.

As shown in FIGs. 2(a) and 2(b), the body 300 includes a case 301, a yoke 302, a magnet 303, a pole 304, and a voice coil bobbin 307. As shown in FIGs. 2(a) and 2(b), the vibrator 400 is disposed so as to penetrate the body 300.

The case 301 has a hollow, tubular (cylindrical) shape and is disposed in the cushion 200 such that the tube axis points in the left-right direction. Through holes 301a and 301b through which the vibrator 400 passes are disposed in the centers of the left and right sidewalls of the tubular shape. The through holes 301a and 301b are provided with bearings 305a and 305b, respectively. The bearings 305a and 305b are members that smooth the movement in the axial direction (the left-right direction of FIGs. 2(a) and 2(b)) of the vibrator 400 and the rotation in the circumferential direction thereof while regulating the movement in the up-down direction of the vibrator 400. The bearings 305a and 305b allow not only the rotation of the vibrator 400 and but also the axial movement (slide movement) thereof and therefore serve as slide bearings.

The yoke 302, magnet 303, and pole 304 are disposed in the central portion of the case 301 and on the perimeter of the vibrator 400 located in the case 301. The pole 304 is an iron member having high magnetic permeability, and the yoke 302 is a member that generates a magnetic flux (magnetic field) by efficiently transmitting the magnetic force of the magnet 303 to the pole 304.

The yoke 302 has a bottomed tubular shape, and a through hole 302a that the vibrator 400 passes through and that fixes the vibrator 400 is formed in the center of the bottom thereof. The outer diameter R3 of the yoke 302 is smaller than the inner diameter R4 of the case 301, and a clearance L1 is ensured between the inner circumferential surface of the case 301 and the outer circumferential surface of the yoke 302. The presence of the clearance L1 prevents the outer circumferential surface of the yoke 302 from contacting the inner circumferential surface of the case 301 even if the yoke 302 moves back and forth in the axial direction of the vibrator 400 (moves in the left-right direction of FIGs. 2(a) and 2(b)).

The magnet 303 and pole 304 have ring shapes, and the vibrator 400 passes through the respective ring holes. The outer diameters of the ring-shaped magnet 303 and pole 304 are smaller than the inner diameter of the yoke 302. The magnet 303 and then the pole 304 are put in the yoke 302 from the open end (the right end in FIGs. 2(a) and 2(b)) of the yoke 302. The yoke 302, pole 304, and magnet 303 are coupled to each other with the magnet 303 and pole 304 housed in the yoke 302. Also, the yoke 302, magnet 303, and pole 304 are integrally fixed to the vibrator 400 with the vibrator 400 passed through the through hole 302a and ring holes.

The voice coil bobbin 307 is disposed on the inner right sidewall 301c of the case 301, that is, on the sidewall 301c of the case 301 facing the pole 304. A voice coil (coil) 308 is disposed on one end 307a of the voice coil bobbin 307. The other end 307b of the voice coil bobbin 307 is fixed to the right sidewall 301c of the case 301, and the one end 307a of the voice coil bobbin 307 is disposed between the outer circumferential surface of the pole 304 and the inner circumferential surface of the yoke 302.

As described above, the outer diameter of the pole 304 is smaller than the inner diameter of the yoke 302. Thus, a clearance L2 is ensured between the inner circumferential surface of the yoke 302 and the outer circumferential surface of the pole 304 facing this inner circumferential surface. The one end 307a of the voice coil bobbin 307 is located in the clearance L2, and the voice coil 308 is located between the yoke 302 and pole 304.

When a current is passed through the voice coil 308 of the vibration generation apparatus 1 thus configured, a force acting in the extending direction of the vibrator 400 occurs due to the influence of the current of the voice coil 308 and a magnetic flux that occurs between the yoke 302 and pole 304 (Fleming's left-hand rule). Due to the force acting in the extending direction, the yoke 302, magnet 303, pole 304, and vibrator 400 integrally move relative to the center of the case 301.

Here, when an alternating-current signal is used to be passed through the voice coil 308, the vibrator 400 and the like reciprocate relative to the case 301. Thus, the body 300 and vibrator 400 approach and leave each other, and the vibrator 400 and case 301 (body 300) generate vibrations in the extending direction of the vibrator 400 by action and reaction caused by the respective movements.

In particular, the yoke 302 and pole 304 are formed of metal materials and therefore are members having relatively large masses in the vibration generation apparatus 1. The magnet 303 also has a large mass. Thus, the reciprocation of the yoke 302, magnet 303, and pole 304 having the large masses integral with the vibrator 400 increases the influence of the action and reaction caused by the movements of the case 301 and vibrator 400, resulting in effective generation of greater vibrations.

Although the outer surface (outer portion) of the vibration generation apparatus 1 is bonded to the cushion material 202, the cushion material 202 allows the relative movements of the case 301 and vibrator 400 due to its elasticity. On the other hand, when the force generated by the voice coil 308, magnet 303, yoke 302, and the other greatly act on the case 301 in the direction in which the case 301 leaves the vibrator 400, a force in a direction in which the acting force is returned is generated by the restoring force of the elastic cushion material 202. Thus, even if a great force acts on the vibrator 400 in a direction in which the vibrator 400 leaves the center of the case 301, the restoring force of the cushion material 202 would reduce the great force, preventing the yoke 302, magnet 303, and pole 304 from contacting the left or right sidewall of the case 301.

With no current flowing through the voice coil 308, the case 301 and vibrator 400 stop to move relative to each other. In this case, the position of the vibrator 400 relative to the case 301 is always returned to the same position as the initial position by the shape restoring function of the cushion material 202. Thus, the voice coil 308 is returned to between the yoke 302 and pole 304. As a result, when a current starts to flow through the voice coil 308, the voice coil 308 is always located between the yoke 302 and pole 304, allowing the magnetic flux to more effectively act on the current flowing through the voice coil 308.

As described above, the vibration generation apparatus 1 according to the first embodiment has a configuration different from a conventional exciter 100. That is, the vibration generation apparatus 1 differs from the configuration in which the magnet 122 and yokes 121a and 121b are swingably fixed to the case 130 through the damper 140; the magnet 122 and yokes 121a and 121b are swung using a voice coil; and only the "case 130" generates a vibration by reaction to the swing and transmits the vibration to the vibration transmission member 110, shown in FIG. 4.

In the vibration generation apparatus 1 according to the first embodiment, the magnet 303, yoke 302, and the other are fixed to the vibrator 400. Thus, the vibration generation apparatus 1 is able to "directly vibrate the rod-shaped vibrator 400" whose end is exposed from the case 301 by the reciprocation of the magnet 303, yoke 302, and the other as well as to cause "not only the vibrator 400 but also the case 301 to effectively generate great vibrations" by action and reaction caused by the movements of the case 301 and vibrator 400. That is, unlike the conventional vibration generation apparatus 150 that transmits the vibration of the case 130 to the seat through the rod-shaped vibration transmission member 110 shown in FIG. 4, the vibration generation apparatus 1 is able to cause both the case 301 and the rod-shaped vibrator 400 to generate vibrations and thus to effectively transmit the vibrations to a person seated on the cushion 200.

The vibration generation apparatus 1 according to the first embodiment is embedded in the cushion material 202 with the case 301 and vibrator 400 bonded to the cushion material 202, and the voice coil 308 is returned to between the yoke 302 and pole 304 by the shape restoring function of the cushion material 202 when no current is flowing through the voice coil 308. Thus, unlike in the conventional vibration generation apparatus 150, there is no need to swingably mount the yokes 121a and 121b and the other to the case 130 through the damper 140, allowing for omission of a damper.

Thus, it is made easy to reduce the diameter of the case 301 of the vibration generation apparatus 1, and when disposing the vibration generation apparatus 1 in the cushion 200, the external dimension R5 (e.g., the dimension in the up-down direction of FIG. 2(a)) of the vibration generation apparatus 1 in the thickness direction (up-down direction) of the cushion 200 is reduced. That is, the vibration generation apparatus 1 is easily embedded in the cushion 200, as shown in FIG. 1, and the seated person perceives vibrations through the cushion 200.

Also, since the diameter of the case 301 of the vibration generation apparatus 1 is reduced, direct embedding of the vibration generation apparatus 1 in the vehicle seat is less likely to be restricted by the disposition space or the like. That is, ease in disposing the vibration generation apparatus 1 in the vehicle seat is increased.

Also, the clearance L1 is ensured between the inner surface of the case 301 and the outer surface of the yoke 302, and the yoke 302 and the others is prevented from contacting the case 301 when the yoke 302 and the others move back and forth in the axial direction of the vibrator 400 (move in the left-right direction of FIG. 2(a)). Thus, when the vibrator 400 reciprocates relative to the case 301, such movement of the vibrator 400 is smoothly performed without being suppressed. As a result, both the vibrator 400 and case 301 are able to effectively generate vibrations.

The vibrator 400 has a cylindrical rod shape, and the body 300 also has a tubular shape. That is, both components have external shapes including no acute-angled portion. Thus, when a person sits on the cushion 200 in which the vibration generation apparatus 1 is embedded, the person is unlikely to have a feeling of strangeness. In particular, in the vibration generation apparatus 1 according to the first embodiment, the case 301 has the reduced diameter. Thus, the vibration generation apparatus 1 is able to reduce the feeling of strangeness that the seated person has in the thickness direction (up-down direction) of the cushion material 202 compared to a conventional vibration generation apparatus.

The magnet 303, yoke 302, pole 304, voice coil bobbin 307, and the like housed in the case 301 are isolated from the outside (cushion material 202 and the like) of the case 301 by the bearings 305a and 305b. Thus, when the vibrator 400 reciprocates, entry of dust, stain, or the like into the case 301 is prevented.

### [Second Embodiment]

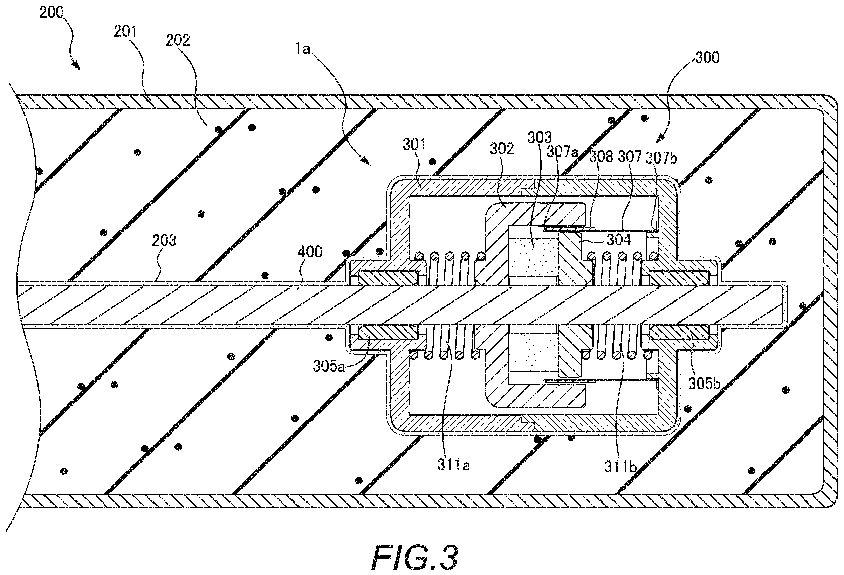

A vibration generation apparatus according to one embodiment of the present invention is not limited to the configuration described in the first embodiment. FIG. 3 is a sectional view showing a vibration generation apparatus 1a according to a second embodiment.

The vibration generation apparatus 1a according to the second embodiment differs from the vibration generation apparatus 1 according to the first embodiment in that it includes two compression springs (spring portion) 311a and 311b. The vibration generation apparatus 1a includes the same components as the vibration generation apparatus 1 except for the compression springs 311a and 311b. For this reason, the same components shown in FIG. 3 are given the same reference signs as those in FIG. 2 and will not be described in detail.

As shown in FIG. 3, the two compression springs 311a and 311b are disposed in a case 301. One compression spring, 311a, is disposed between one sidewall of the case 301 and a yoke 302, and another compression spring, 311b, is disposed between the other sidewall of the case 301 and a pole 304. A vibrator 400 passes through the central portions of the compression springs 311a and 311b in the expansion/contraction direction of the springs. In principle, compression springs to the same specification having the same spring constant and the same amount of deformation are used as the two compression springs 311a and 311b.

When no current is flowing through a voice coil 308, the two compression springs 311a and 311b are applying pressure to a magnet 303, the yoke 302, the pole 304, and the other from the inner walls of the case 301 and thus the magnet 303, yoke 302, pole 304, and the like are still in the central portion of the case 301. A voice coil bobbin 307 is mounted on the case 301 such that the voice coil 308 is located in the clearance between the yoke 302 and pole 304 still in the central portion of the case 301.

When a current is passed through the voice coil 308, a force acting in the extending direction of the vibrator 400 occurs due to the influence of a magnetic flux that occurs between the yoke 302 and pole 304 (Fleming's left-hand rule). Due to the force acting in the extending direction, the yoke 302, magnet 303, pole 304, and vibrator 400 integrally reciprocate in the case 301.

As described above, the yoke 302, magnet 303, and pole 304 are biased by the two compression springs 311a and 311b from both sidewalls (inner sidewalls) of the case 301. When the vibrator 400 moves forward (moves) in the extending direction in this state, the compression spring 311a on the forward side is compressed and the compression spring 311b on the opposite side is extended. Thus, the two compression springs 311a and 311b generate forces that attempt to return the vibrator 400 to its original position. On the other hand, when the vibrator 400 moves backward, the compression spring 311b on the backward side is compressed and the compression spring 311a on the opposite side is extended. Thus, the two compression springs 311a and 311b generate forces that attempt to return the vibrator 400 to its original position.

Due to such forces of the compression springs 311a and 311b, the reciprocation of the vibrator 400 relative to the case 301 is performed smoothly and stably. Thus, the vibration generation apparatus 1a is able to "directly vibrate the rod-shaped vibrator 400" that is exposed from the case 301, as well as to "cause not only the vibrator 400 but also the case 301 to effectively generate great vibrations" by action and reaction caused by the movements of the case 301 and vibrator 400. That is, unlike the conventional vibration generation apparatus 150 that transmits the vibration of the case 130 to the seat through the rod-shaped vibration transmission member 110 shown in FIG. 4, the vibration generation apparatus 1a is able to cause both the case 301 and rod-shaped vibrator 400 to generate vibrations and thus to effectively transmit the vibrations to the seated person.

Also, the compression springs 311a and 311b are disposed on both ends of the yoke 302, magnet 303, and pole 304. Thus, when a force generated by the voice coil 308, the magnet 303, yoke 302, and the other greatly acts on the vibrator 400, the acting force is directed toward the direction in which the yoke 302, magnet 303, and pole 304 are returned to the original positions, by the elastic forces of the compression springs 311a and 311b. As a result, even if a great force acts on the vibrator 400 in the direction in which the vibrator 400 leaves the center of the case 301, the vibration generation apparatus 1a is able to reduce this force using the elastic forces (restoring forces, expansion/contraction function) of the compression springs 311a and 311b and thus to prevent the yoke 302, magnet 303, and pole 304 from contacting the left or right sidewall of the case 301.

When no current is flowing through the voice coil 308, the case 301 and vibrator 400 stop to move relative to each other. In this case, the position of the vibrator 400 relative to the case 301 is always returned to the same position as the initial position by the biasing forces of the compression springs 311a and 311b. Thus, the voice coil 308 is returned to the clearance between the yoke 302 and pole 304. As a result, when a current starts to flow through the voice coil 308, the voice coil 308 is always located between the yoke 302 and pole 304 and thus the magnetic flux more effectively acts on the current flowing through the voice coil 308.

As with the vibration generation apparatus 1 described in the first embodiment, the vibration generation apparatus 1a is embedded in a cushion material 202, and the outer surfaces of the case 301 and vibrator 400 are bonded to the cushion material 202 (bonding using an adhesive 203 shown in FIG. 3). Thus, the vibration generation apparatus 1a is able to realize the relative movements of the vibrator 400 and case 301 using not only the expansion and contraction of the compression springs 311a and 311b but also the elasticity of the cushion material 202 and to cause both the vibrator 400 and case 301 to effectively generate vibrations by action and reaction.

Also, by using expansion and contraction of the compression springs 311a and 311b and the elasticity of the cushion material 202, the vibration generation apparatus 1a is able to more effectively realize the above-mentioned prevention of the case 301 from contacting the left or right sidewall and the setting of the voice coil 308 and the other to the initial positions.

Also, the vibration generation apparatus 1a is provided with the compression springs 311a and 311b, and the vibrator 400 and a body 300 are bonded to the cushion material 202 using the adhesive 203. When the vibrator 400 reciprocates relative to the case 301, the case 301 and vibrator 400 are influenced by two types of reaction forces, that is, reaction forces generated by the compression springs 311a and 311b and a reaction force generated by the elasticity of the cushion material 202. Thus, when a current is passed through the voice coil 308, resonance is generated by changing the frequency of the input current (signal). Use of this resonance allows for changing the pattern or strength of the vibration perceived by the seated person and thus making notifications using various types of vibrations.

For example, when a high-frequency signal is inputted to the voice coil 308, a surface wave is generated on the vibrator 400 and transmitted to the entire cushion material 202 as a fine vibration. Thus, the vibration generation apparatus 1a is able to generate specific resonance corresponding to the properties of the cushion material 202 and compression springs 311a and 311b, and the like.

Also, when a low-to-mid frequency signal is inputted to the voice coil 308, the vibrator 400 greatly reciprocates relative to the case 301 compared to when a high-frequency signal is inputted and thus generates a great vibration in the extending direction of the vibrator 400. The generated vibration differs from the above-mentioned fine vibration based on the surface wave. Thus, the vibration generation apparatus 1a is able to generate different resonance corresponding to the properties of the cushion material 202 and compression springs 311a and 311b, and the like.

Also, by using springs having different spring constants as the compression springs 311a and 311b, the resonant frequency may be changed. In this case, by previously setting the spring constants of the two compression springs 311a and 311b in accordance with a desired resonant frequency, a vibration having the desired resonant frequency may be actively generated.

Note that not only the vibration output apparatus 1a described in the second embodiment but also the vibration generation apparatus 1 described in the first embodiment is able to generate different resonance by changing the frequency of the current (signal) inputted to the voice coil 308. The vibration generation apparatus 1 is also able to generate a surface wave on the vibrator 400 in accordance with the frequency of a signal inputted to the voice coil 308, to generate a great vibration in the extending direction of the vibrator 400, and to generate different resonance corresponding to the properties of the cushion material 202, and the like.

### [Third Embodiment]

Next, a vibration generation apparatus according to a third embodiment will be described. In the first and second embodiments described above, the vibration generation apparatus 1 or 1a is embedded in the cushion material 202, and the outer surface (outer portion) of the vibration generation apparatus 1 or 1a is bonded to the cushion material 202. However, when disposing the vibration generation apparatus 1 or 1a in the cushion 200, the outer surface of the vibration generation apparatus 1 or 1a need not necessarily be bonded to the cushion material 202.

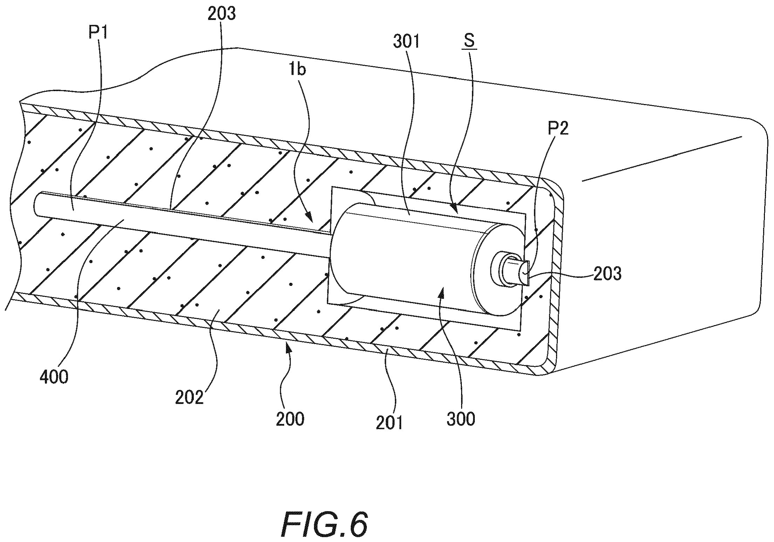

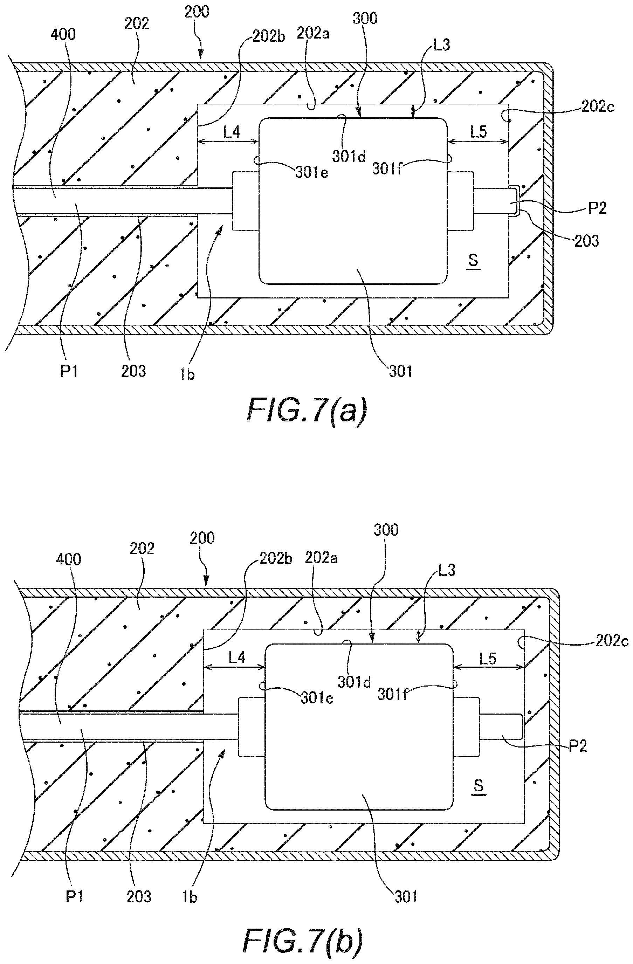

FIGs. 6 and 7(a) are partial sectional views showing a state in which the vibration generation apparatus according to the third embodiment is embedded in a cushion 200. For convenience, FIGs. 6 and 7(a) show only a portion of the cushion 200 in a cross-section. While the vibration generation apparatus according to the third embodiment is given reference sign 1b in the description below, the same structure as the vibration generation apparatus 1 described in the first embodiment or the vibration generation apparatus 1a described in the second embodiment may be used as the specific configuration of the vibration generation apparatus 1b. For this reason, the vibration generation apparatus 1 or vibration generation apparatus 1a may practically be used as the third embodiment. The same components as those of the first embodiment in the vibration generation apparatus 1b according to the third embodiment are given the same reference signs and will not be described in detail.

As shown in FIGs. 6 and 7(a), the vibration generation apparatus 1b according to the third embodiment is located in a cushion material 202. Portions exposed from a body 300, of a vibrator 400 of the vibration generation apparatus 1b, more specifically, most of a long-length portion P1 and an end of a short-length portion P2 of the vibrator 400 shown in FIG. 7(a) are embedded in the cushion material 202. The outer surfaces (outer portions) of the portions P1 and P2 embedded in the cushion material 202, of the vibrator 400 are in contact with the cushion material 202 and are bonded to the cushion material 202 using an adhesive 203.

On the other hand, as shown in FIGs. 6 and 7(a), a space S is disposed in the cushion material 202 so as to face the outer surface (outer portion) of the body 300. As described in the first and second embodiments, the body 300 and vibrator 400 approach and leave each other, and these movements cause action and reaction, which then generate vibrations in the extending direction of the vibrator 400. The space S is disposed in the cushion material 202 so that movement of the body 300 (case 301) relative to the vibrator 400 is not hampered.

As shown in FIG. 7(a), a clearance L3 is ensured in the space S between the outer circumferential curved surface 301d of the case 301 and the inner surface 202a of the cushion material 202. When the case 301 moves so as to approach and leave the vibrator 400, the clearance L3 prevents the outer circumferential curved surface 301d of the case 301 from contacting the inner surface 202a of the cushion material 202 and thus prevents the movement of the case 301 from being hampered by the cushion material 202.

Also, as shown in FIG. 7(a), a clearance L4 is ensured in the space S between a side surface 301e of the case 301 on the long-length portion P1 side of the vibrator 400 and an inner surface 202b of the cushion material 202. The clearance L4 is set to a length such that when the case 301 approaches and leaves the vibrator 400 and moves to the long-length portion P1 side of the vibrator 400, the side surface 301e of the case 301 does not contact the inner surface 202b of the cushion material 202. Also, a clearance L5 is ensured in the space S between a side surface 301f of the case 301 on the short-length portion P2 side of the vibrator 400 and an inner surface 202c of the cushion material 202. The clearance L5 is set to a length such that when the case 301 approaches and leaves the vibrator 400 and moves to the short-length portion P2 side of the vibrator 400, the side surface 301f of the case 301 does not contact the inner surface 202c of the cushion material 202.

As described above, the clearances L4 and L5 are ensured between the inner surfaces 202b and 202c of the cushion material 202 and the side surfaces 301e and 301f of the case 301, respectively. Thus, when the case 301 approaches and leaves the vibrator 400, the clearances L4 and L5 prevent the side surfaces 301e and 301f of the case 301 from contacting the inner surfaces 202b and 202c of the cushion material 202 and thus prevents the movement of the case 301 from being hampered by the cushion material 202.

Also, the space S (clearances L3, L4, L5) are formed between the outer surface (outer portion) of the body 300 (case 301) and the cushion material 202. Thus, unlike in the body 300 (case 301) of the vibration generation apparatus 1 according to the first embodiment or the vibration generation apparatus 1a according to the second embodiment, the movement of the body 300 (case 301) is not influenced by the softness or the like of the cushion material 202.

For example, the outer surface of the body 300 (case 301) according to the first and second embodiments is bonded to the cushion material 202. If the cushion material 202 is a soft material, the cushion material 202 is less likely to hamper the movement of the body 300 relative to the vibrator 400. On the other hand, if the cushion material 202 is a hard material, the cushion material 202 may hamper the movement of the body 300 relative to the vibrator 400. Also, if the cushion material 202 is a hard material, the movement of the body 300 relative to the vibrator 400 is suppressed and thus the vibration efficiency is reduced. As a result, the vibrations generated in the extending direction of the vibrator 400 may be weakened.

For this reason, as is done in the vibration generation apparatus 1b according to the third embodiment, the space S is formed between the outer surface (outer portion) of the body 300 (case 301) and the cushion material 202. Thus, when the body 300 approaches and leaves the vibrator 400, the body 300 does not contact the cushion material 202. As a result, the vibration generation apparatus 1b is able to effectively generate vibrations without being influenced by the hardness of the cushion material 202.

Also, if the cushion material 202 is a hard material, the vibration generation apparatus 1b according to the third embodiment is able to more efficiently transmit a vibration transmitted to the vibrator 400 to the surface of the cushion 200 through the hard cushion material 202 bonded to the outer surface of the vibrator 400 and thus to cause the person sitting on the cushion 200 to more effectively perceive the vibration.

Also, if the cushion material 202 is a hard material, the vibrator 400 is pressure-welded to the cushion material 202 and thus strongly grasped by the cushion material 202. Thus, when the body 300 approaches and leaves the vibrator 400, the vibration generation apparatus 1b is able to suppress displacement of the body 300 in a direction (e.g., in the up-down direction of the cushion 200) different from the extending direction of the vibrator 400 and thus to effectively generate a vibration in the extending direction of the vibrator 400.

Also, if the vibrator 400 is grasped by the cushion material 202 consisting of a hard material, the vibration generation apparatus 1b is able to use the repulsive force of the cushion material 202 to make more effective the vibration generated by the body 300 by approaching and leaving the vibrator 400. That is, by using the repulsive force of the cushion material 202 to make the vibration greater, the vibration generation apparatus 1b is able to cause the person sitting on the cushion 200 to perceive the greater vibration.

The end of the short-length portion P2 of the vibrator 400 has been described as being embedded in the cushion material 202 and bonded thereto using the adhesive, with reference to FIG. 7(a). However, if the long-length portion P1 of the vibrator 400 is bonded to the cushion material 202 so that it is not displaced from the cushion material 202, or if the long-length portion P1 of the vibrator 400 is relatively long and therefore would not be displaced from the cushion material 202 even if an adhesive is not used, the end of the short-length portion P2 of the vibrator 400 need not be embedded in or bonded to the cushion material 202.

For example, if the end of the short-length portion P2 of the vibrator 400 is not embedded in the cushion material 202 or bonded thereto using an adhesive, as shown in FIG. 7(b), but the vibration generation apparatus 1b is strongly grasped by the cushion material 202 through the long-length portion P1 of the vibrator 400, the body 300 is less likely to be displaced in a direction different from the extending direction of the vibrator 400 even when the body 300 approaches and leaves the vibrator 400. Thus, even if the end of the short-length portion P2 is not embedded in or bonded to the cushion material 202, vibrations can be effectively generated in the extending direction of the vibrator 400.

### [Fourth Embodiment]

Next, a vibration generation apparatus 1c according to a fourth embodiment will be described. In the vibration generation apparatus 1b according to the third embodiment, the space S has been described as being disposed between the outer surface of the body 300 located in the cushion material 202 and the cushion material 202. The disposition of the space S in this manner is advantageous in that the movement of the body 300 is not hampered by the cushion material 202. Also, when the body 300 approaches and leaves the vibrator 400, the body 300 and vibrator 400 cause action and reaction and thus generate vibrations. The vibrator 400 transmits the generated vibration to the outside of the cushion 200, and the body 300 also transmits the vibration to the outside.

However, vibration transmission characteristics of the space S are significantly poorer than those of the cushion material 202 or the like. This makes it difficult to effectively transmit the vibration generated by the body 300 to the outside of the cushion 200.

In the vibration generation apparatus 1c according to the fourth embodiment, the space S formed between the cushion material 202 and the body 300 in the vibration generation apparatus 1b according to the third embodiment is filled with a softer cushion material than the cushion material 202 that grasps the vibrator 400. For convenience, in the vibration generation apparatus 1c according to the fourth embodiment, it is assumed that the cushion material 202 used in the first to third embodiments is a cushion material (first cushion material) 205 consisting of a hard material and that a cushion material consisting of a softer material than the cushion material 205 is a cushion material (second cushion material) 204.

The hardness of the cushion material 205 is not limited to any particular degree of hardness as long as the cushion material 205 consists of a harder material than the cushion material 204. The cushion material 204 preferably has softness such that it can be deformed in response to the body 300 (case 301) approaching and leaving the vibrator 400.

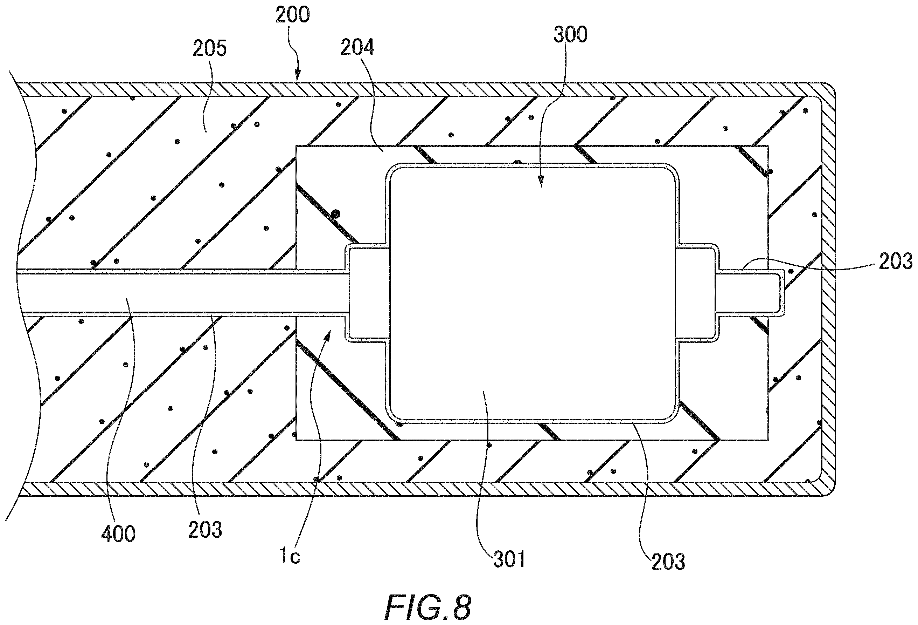

FIG. 8 is a drawing showing a state in which the vibration generation apparatus 1c according to the fourth embodiment is disposed in the cushion 200. In the vibration generation apparatus 1c according to the fourth embodiment, the space S described in the third embodiment (the space between the cushion material 205 and case 301) is filled with the cushion material 204 consisting of a softer material than the cushion material 205.

Thus, when the body 300 approaches and leaves the vibrator 400, the cushion material 204 is compressed and expanded in accordance with the amount of movement of the body 300. As a result, the movement of the body 300 is less likely to be hampered by the soft cushion material 204.

Also, the soft cushion material 204 has more excellent vibration transmission characteristics than the space S and thus the vibration generated by the body 300 is more reliably transmitted to the cushion material 202 through the cushion material 205. As a result, the vibration generation apparatus 1c according to the fourth embodiment is able to efficiently transmit the vibration to the surface of the cushion 200 compared to when the space S is formed and thus to cause the person sitting on the cushion 200 to perceive the stronger vibration.

Note that if sufficient friction does not occur between the case 301 and cushion material 204, it may be difficult to flexibly compress or expand the soft cushion material 204 in response to the movement of the body 300. In this case, as shown in FIG. 8, the cushion material 204 and case 301 are bonded together using an adhesive 203. Thus, the cushion material 204 is flexibly and smoothly deformed in response to the movement of the body 300.

The cushion material 204 filling the space S does not hamper the movement of the body 300 (case 301), and the vibration of the body 300 is transmitted to the outside of the cushion 200 through the soft cushion material 204 and the hard cushion material 205.

While the first to fourth embodiments have been described in detail as vibration generation apparatuses according to embodiments of the present invention with reference to the drawings, the vibration generation apparatus is not limited to the examples described in the first to fourth embodiments. It is apparent that those skilled in the art can conceive of various changes or modifications thereto without departing from the scope set forth in the claims. Such changes or modifications are also able to produce advantageous effects similar to those of the vibration generation apparatuses 1, 1a, 1b, and 1c described in the first to fourth embodiments.

For example, while the material of the vibrator 400 is typically a metal, such as iron, it is not limited to a metal or the like as long as it easily transmits vibrations.

The vibrator 400 need not be cylindrical as long as it is a rod-shaped member. For example, while the vibrator 400 preferably has an approximately circular cross-section, it may have a polygonal cross-section, such as a triangular or rectangular one. Note that if the vibrator 400 has a triangular, rectangular, or other cross-section, care must be taken so that such a vibrator does not affect the seating comfort of the seated person. If the vibrator 400 has an approximately circular cross-section, the seating comfort or the like can be improved since such a vibrator has no angular portion that hits the buttocks, thigh, or the like.

While, in the first to fourth embodiments described above, the case 301 is provided with the voice coil bobbin 307 and voice coil 308 and the vibrator 400 is provided with the yoke 302, magnet 303, and pole 304, the vibrator 400 may be provided with the voice coil bobbin 307 and voice coil 308 and the case 301 may be provided with the yoke 302, magnet 303, and pole 304. Such a configuration is also able to generate a force acting in the extending direction of the vibrator 400 using the current flowing through the voice coil 308 and the magnetic flux generated by the yoke 302, magnet 303, and pole 304 in accordance with the Fleming's left-hand rule. Thus, this configuration is able to cause the vibrator 400 to reciprocate in the extending direction by the generated force and to cause the vibrator 400 and case 301 to generate vibrations by action and reaction.

While, in the first to fourth embodiments, the vibration generation apparatus 1, 1a, 1b, or 1c has been described as being disposed (e.g., embedded) in the cushion 200, the vibration generation apparatus 1, 1a, 1b, or 1c that has yet to be disposed (embedded) in the cushion 200 may be produced as a finished product and sold. The vibration generation apparatus 1, 1a, 1b, or 1c thus produced and sold is also able to produce the advantageous effects described in the first to fourth embodiments as long as the vibration generation apparatus is disposed (embedded) in a commercially available cushion including a cushion material or a vehicle seat including a cushion material.

In the first, second, and fourth embodiments, the body 300 and vibrator 400 of the vibration generation apparatus 1, 1a, or 1c have been described as being bonded to the cushion material 202, 204, or 205 using the adhesive 203. Also, in the third embodiment, the vibrator 400 of the vibration generation apparatus 1b has been described as being bonded to the cushion material 202 using the adhesive 203. However, in the vibration generation apparatuses 1, 1a, 1b, and 1c, the body 300 or vibrator 400 need not necessarily be bonded to the cushion material 202, 204, or 205 using the adhesive 203.

For example, the vibrator 400 and the cushion material 202 or 205 need not be bonded together using the adhesive 203 as long as the vibrator 400 is strongly pressure-joined to the cushion material 202 or 205 and thus the vibrator 400 is never displaced from the cushion material 202 or 205 in response to the body 300 moving forward or backward even if the adhesive 203 is not used between the vibrator 400 and the cushion material 202 or 205. Also, if a level of friction that hampers movement of the vibrator 400 occurs between the vibrator 400 and cushion material 202 or 205 when the body 300 and vibrator 400 approach and leave each other, there is no need to use the adhesive 203.

If the cushion 200 is filled with the cushion material 202, 204, or 205 by insert molding with the vibration generation apparatus 1, 1a, 1b, or 1c disposed in the cushion 200, the cushion material 202, 204, or 205 is substantially bonded to the body 300 and vibrator 400 even if the adhesive 203 is not used.

In such a case, even if the adhesive 203 is not used, vibrations generated by the vibrator 400 and body 300 are effectively transmitted to the outside of the cushion 200 through the cushion material 202, 204, or 205. Thus, the person seated on the cushion 200 perceives the sufficiently large vibrations.

Similarly, the body 300 and the cushion material 202 or 204 need not necessarily be bonded together using the adhesive 203. If sufficient friction or the like occurs between the body 300 and cushion material 202 or 204, the vibration generated by the body 300 is effectively transmitted to the outside of the cushion 200 through the cushion material 202 or 204 even if the adhesive 203 is not used. Thus, the user perceives the sufficiently large vibration.

While the vibration generation apparatus 1, 1a, 1b, and 1c disposed in the cushion 200 or the seating portion of the vehicle seat have been described as examples of vibration generation apparatuses according to embodiments of the present invention, the vibration generation apparatus need not be disposed in the cushion 200 or seating portion. For example, the vibration generation apparatus may be disposed in the backrest or headrest of the vehicle seat.

### REFERENCE SIGNS LIST

1, 1a, 1b, 1c, 150 vibration generation apparatus
100 exciter
110 vibration transmission member
120, 400 vibrator
121a, 121b, 302 yoke
122,303 magnet
130, 301 case
140 damper
160, 200 cushion
170 vehicle seat
201 (of cushion) cover
202 (of cushion) cushion material (elastic member)
202a, 202b, 202c (of cushion material) inner surface
203 adhesive
204 (of soft material) cushion material (elastic member, second cushion material)
205 (of hard material) cushion material (elastic member, first cushion material)
300 (of vibration generation apparatus) body
301a, 301b (of case) hole
301c (inner portion of case) right sidewall
301d (inner portion of case) outer circumferential curved surface
301e, 301f (inner portion of case) side surface
302a (of yoke) through hole
304 pole
305a, 305b bearing
307 voice coil bobbin
307a (of voice coil bobbin) one end
307b (of voice coil bobbin) the other end
308 voice coil (coil)
311a, 311b compression spring (spring portion)
R1 (of exciter) external dimension
R2 (of vibration transmission member) external dimension
R3 (of yoke) outer diameter
R4 (of case) inner diameter
R5 (of vibration generation apparatus) external dimension
L1 (between inner circumferential surface of case and yoke) clearance
L2 (between inner circumferential surface of yoke and outer circumferential surface of pole) clearance
L3 (between outer circumferential curved surface of case and inner surface of cushion material) clearance
L4 (between side surface of case on long-length portion side of vibrator and inner surface of cushion material) clearance
L5 (between side surface of case on short-length portion side of vibrator and inner surface of cushion material) clearance
P1 (of vibrator) long-length portion
P2 (of vibrator) short-length portion
S (formed between cushion material and case) space

## Claims

1. A vibration generation apparatus comprising:
a rod-shaped vibrator;
a case housing one portion of the vibrator;
a magnet and a yoke disposed on one of the one portion of the vibrator and an inner portion of the case; and
a coil disposed near the magnet and the yoke and on the other of the one portion of the vibrator and the inner portion of the case, wherein
an other portion of the vibrator exposed to outside of the case and an outer portion of the case are connected through an elastic member so as to be able to approach and leave each other, and
vibrations are generated by generating a force acting in an extending direction of the vibrator using a current flowing through the coil and a magnetic flux generated by the magnet and the yoke and causing the vibrator and the case to approach and leave each other using the generated force.

2. The vibration generation apparatus according to claim 1, wherein when the current flowing through the coil is stopped, the coil is returned to a position near the magnet and the yoke by a shape restoring function of the elastic member.

3. The vibration generation apparatus according to claim 1 or 2, wherein
the elastic member is a cushion material,
the vibrator and the case are embedded in the cushion material, and
the other portion of the vibrator and the outer portion of the case are bonded to the cushion material.

4. A vibration generation apparatus comprising:
a rod-shaped vibrator;
a case housing one portion of the vibrator;
a magnet and a yoke disposed on one of the one portion of the vibrator and an inner portion of the case;
a coil disposed near the magnet and the yoke and on the other of the one portion of the vibrator and the inner portion of the case; and
a spring portion including a central portion through which the vibrator passes, one end connected to the inner portion of the case, and another end connected to the one portion of the vibrator, wherein
vibrations are generated by generating a force acting in an extending direction of the vibrator using a current flowing through the coil and a magnetic flux generated by the magnet and the yoke and causing the vibrator and the case to approach and leave each other using the generated force and using the spring portion.

5. The vibration generation apparatus according to claim 4, wherein when the current flowing through the coil is stopped, the coil is returned to a position near the magnet and the yoke by an expansion/contraction function of the spring portion.

6. The vibration generation apparatus according to claim 1 or 2, wherein
the elastic member is a first cushion material,
the vibrator and the case are disposed in the first cushion material,
the other portion of the vibrator is in contact with the first cushion material, and
a space that allows approaching and leaving of the case with respect to the vibrator is formed between the case and the first cushion material.

7. The vibration generation apparatus according to claim 6, wherein the space formed between the case and the first cushion material is filled with a softer second cushion material than the first cushion material.
